# EUROPÄISCHE PATENTSCHRIFT

(11) **EP 0 452 615 B1**
(45) Veröffentlichungstag und Bekanntmachung des Hinweises auf die Patenterteilung: **19.07.1995**
(21) Anmeldenummer: 91100667.4
(22) Anmeldetag: 21.01.1991
(51) Int. Cl.: F16B 2/14, B62D 27/02, F16B 5/06

(54) **Klemmverbindung zwischen einem Profilteil und einem Blechteil unter Vermittlung einer Klemmleiste**
Clamping connection between a profile and a sheet metal using a wedging strip
Connection par serrage entre un profilé et une tôle à l'aide d'une baguette de coincement

(30) Priorität: 06.04.1990 DE 4011237
(43) Veröffentlichungstag der Anmeldung: 23.10.1991
(73) Patentinhaber: Dr.Ing.h.c. F. Porsche Aktiengesellschaft, 70435 Stuttgart (DE)
(72) Erfinder: Wurl, Willi, D-75223 Niefern-Öschelbronn (DE)

(56) Entgegenhaltungen:
- EP-A- 0 051 268
- DE-A- 1 400 225
- FR-A- 2 165 818
- US-A- 4 586 310
- US-A- 4 905 442

## Beschreibung

Die Erfindung bezieht sich auf eine Klemmverbindung zwischen einem Profilteil und einem Blechteil unter Vermittlung einer Klemmleiste gemäß dem Oberbegriff des Patentanspruches 1.

Eine Klemmverbindung der eingangs genannten Gattung ist aus der AT-PS 370 370 bekannt. Bei dieser Anordnung ist ein U- oder V-förmig ausgebildeter Randbereich des Blechteiles in eine korrespondierende Klemmaufnahme des Profilteiles eingesetzt und wird durch eine Klemmleiste in Lage gehalten, wobei die über eine Rastverbindung mit dem Profilteil zusammenwirkende Klemmleiste eine Anformung aufweist, die entsprechend dem Formverlauf des Randbereiches des Blechteiles ausgebildet ist.

Um eine wirkungsvolle Klemmverbindung zu schaffen, müssen die Klemmaufnahme, der Randbereich des Blechteiles und die Anformung des Profilteiles sowie die Bauteile der Rastverbindung sorgfältig aufeinander abgestimmt sein. Der U- oder V-förmig ausgebildete Randbereich des Blechteiles ist schwierig herstellbar und nimmt relativ viel Platz in Anspruch. Da nur der Randbereich des Blechteiles mit der Klemmleiste zusammenwirkt, ist nur an einer Stelle eine Klemmverbindung zwischen Klemmaufnahme, Blechteil und Klemmleiste gegeben, sodaß eine Kippbewegung des Blechteiles erfolgen kann.

Die EP-A-0 051 268 zeigt eine Klemmverbindung zwischen einem Profilteil und einem Blechteil unter Vermittlung einer Klemmleiste, wobei lediglich ein radienförmiger Übergangsbereich eines Endbereiches des Blechteils zwischen dem Profilteil und einem seitlichen Abschnitt der Klemmleiste eingeklemmt ist. Das freie Ende des Blechteils ragt hingegen befestigungslos in einen Hohlraum des Profilteils hinein. Eine keilförmige, nach oben hin offene Klemmaufnahme, an der der abgewinkelte Endbereich des Blechteils vollständig aufliegt, ist dieser Schritt nicht entnehmbar. Zur Halterung des Klemmleiste am Profilteil und zur Bildung der Klemmverbindung sind an der Klemmleiste getrennte Abschnitte vorgesehen.

Aufgabe der Erfindung ist es, eine Klemmverbindung zwischen einem Profilteil und einem Blechteil unter Zwischenschaltung einer Klemmleiste so weiterzubilden, daß bei einfachem Aufbau und guter Funktion eine Kippbewegungen des Blechteiles vermeidende Klemmverbindung geschaffen wird und daß Toleranzen in einfacher Weise ausgleichbar sind.

Erfindungsgemäß wird diese Aufgabe durch die kennzeichnenden Merkmale des Anspruches 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch den etwa rechtwinkelig abgestellten Endbereich des Blechteiles und die etwa T-förmige Ausbildung der Klemmleiste eine Klemmverbindung geschaffen wird, die bei geringem Platzbedarf einen einfachen Aufbau aufweist, wobei sich Toleranzen in einfacher Weise ausgleichen lassen.

Durch die beiden etwa rechtwinkelig zum keilförmigen Fußabschnitt der Klemmleiste verlaufenden Haltelippen wird einerseits eine Kippbewegung des Blechteiles vermieden und andererseits wird lediglich ein definiertes seitliches Aufspreizen der Klemmaufnahme beim Einführen der Klemmleiste ermöglicht, sodaß stets eine funktionsgerechte Klemmverbindung gegeben ist. Die einzelnen Teile der Klemmverbindung lassen sich einfach und kostengünstig herstellen.

Ein Ausführungsbeispiel der Erfindung ist in der Zeichnung dargestellt und wird im folgenden näher beschrieben.

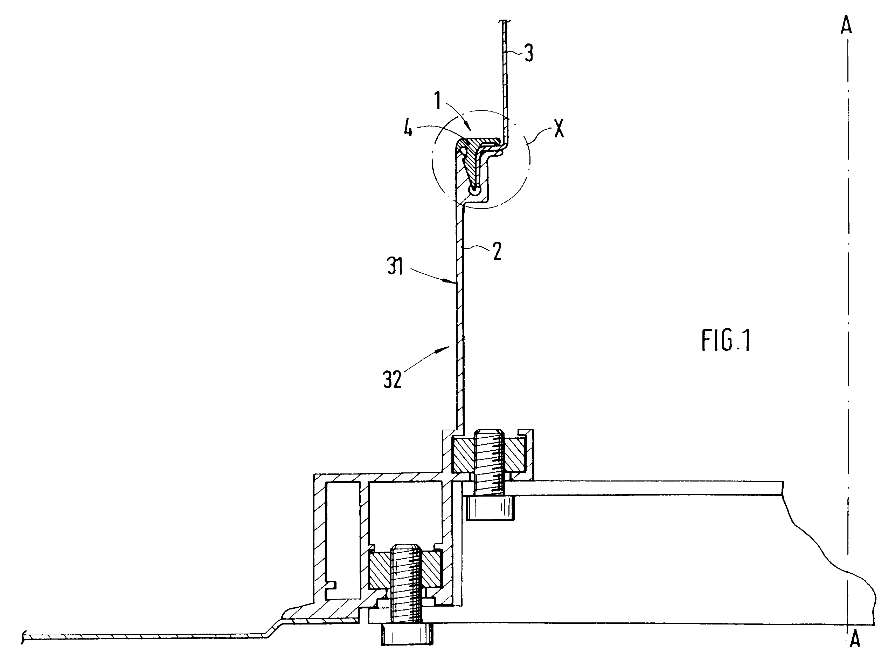

Es zeigt
- Fig.1: einen Vertikalschnitt durch eine Bodenanlage einer Fahrzeug-Aufbaustruktur,
- Fig.2: eine Einzelheit X der Fig.1 in größerem Maßstab,
- Fig.3: das Profilteil der Klemmverbindung im Querschnitt und im Anlieferungszustand,
- Fig.4: die Klemmleiste der Klemmverbindung im Querschnitt und im Anlieferungszustand.

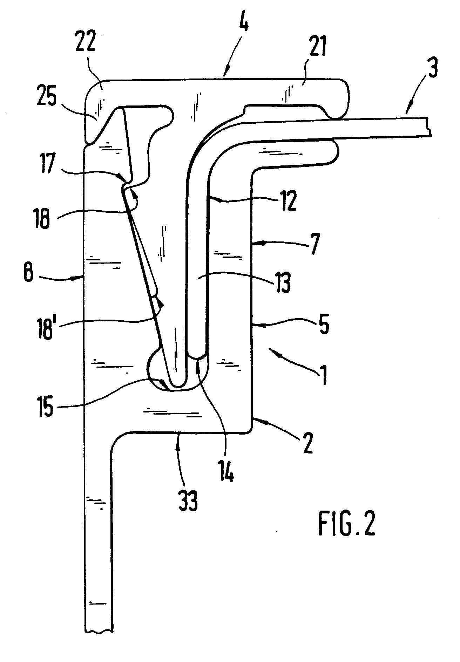

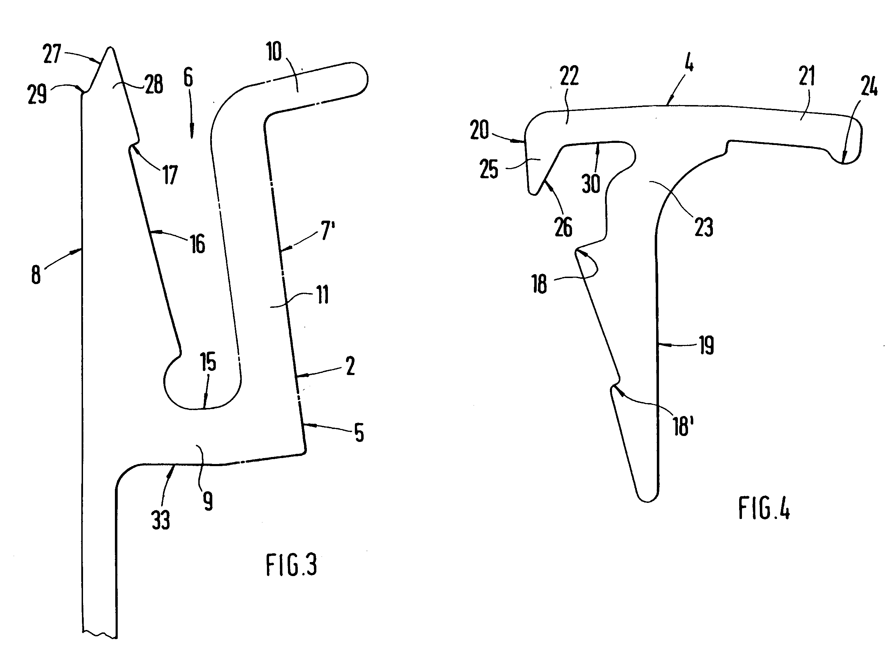

In Fig.2 ist eine Klemmverbindung 1 zwischen einem Profilteil 2 und einem Blechteil 3 unter Vermittlung einer Klemmleiste 4 dargestellt. Das vorzugsweise im Strangpreßverfahren aus Leichtmetall hergestellte längliche Profiteil 2 weist an einem oberen Endbereich örtlich eine Querschnittserweiterung 5 mit einer etwa keilförmig ausgebildeten, nach oben hin offenen Klemmaufnahme 6 auf, die von zwei seitlichen Stegen 7, 8 und einem untenliegenden Verbindungsstück 9 begrenzt wird.
Der eine Steg 7 ist etwa L-förmig profiliert, wobei der kürzere Schenkel 10 dieses Steges 7 vom oberen freien Ende des aufrechten Schenkels 11 weggeführt ist und etwa rechtwinkelig nach außen ragt. Auf dem L-förmigen Steg 7 des Profilteiles 2 und zwar auf der der Klemmaufnahme 6 zugekehrten Seite, liegt ein abgewinkelter Endbereich 12 des ebenfalls aus Leichtmetall hergestellten Blechteiles 3 auf und wird mittels der Klemmleiste 4 in Lage gehalten. Der endseitig abgestellte Flansch 13 des Blechteiles 3 weist eine kürzere Länge auf als die Höhenerstreckung der Klemmaufnahmen 6, so daß das Flanschende 14 mit Abstand zum Grund 15 der Aufnahme verläuft. Im Anlieferungszustand nimmt der Steg 7 die strichpunktiert gezeichnete nach innen gebogene Lage 7'ein (Fig.3).

Der andere, aufrecht ausgerichtete Steg 8 verjüngt sich nach oben hin kontinuierlich und weist auf der der Klemmaufnahme 6 zugekehrten Seite eine vom Grund 15 sich nach oben hin erstreckende schräge Anlagefläche 16 auf, an der örtlich ein stufenförmiger Bereich 17 vorgesehen ist, der mit einer Rastnase 18, 18' eines Fußabschnittes 19 der Klemmleiste 4 zusammenwirkt. Der eine Hinterschneidung bildende Bereich 17 ist etwa in Höhe des kürzeren Schenkels 10 des Steges 7 angeordnet.

Die Klemmleiste 4 weist einen etwa T-förmigen Querschnitt auf und setzt sich aus einem in die Klemmaufnahme 6 hineinragenden Fußabschnitt 19 und einem im wesentlichen oberhalb der Klemmaufnahme 6 liegenden Kopfabschnittes 20 zusammen, wobei der Kopfabschnitt 20 zwei Haltelippen 21, 22 umfaßt. Die eine Haltelippe 21 stützt sich örtlich an der Außenseite des Blechteiles 3 ab, wogegen die andere Haltelippe 22 mit dem Profilteil 2 in Wirkverbindung steht. Der keilförmige Fußabschnitt 19 ist auf der dem Steg 8 zugewandten Seite mit zwei übereinanderliegenden Rastnasen 18, 18' versehen, wobei eine untenliegende erste Rastnase 18' eine Vorraststellung und eine obenliegende zweite Rastnase 18 eine Hauptraststellung der Klemmleiste 4 definieren. Oberhalb der zweiten Rastnase 18 ist ein gebogener Übergangsbereich 23 zwischen dem Fußabschnitt 19 und den beiden Haltelippen 21, 22 der Klemmleiste 4 ausgebildet. Die Haltelippen 21, 22 erstrecken sich zu beiden Seiten des Fußabschnittes 19 und sind etwa rechtwinkelig zum Fußabschnitt 19 ausgerichtet. Die eine Haltelippe 21 weist an ihrem freien Ende auf der dem Blechteil 3 zugekehrten Seite eine etwa halbkreisförmig ausgebildete Querschnittserweiterung 24 auf und liegt unter Vorspannung der Außenseite des Blechteiles 3 an. Der untenliegende Schenkel 10 des L-förmigen Steges 7 der Klemmaufnahme 6 verläuft ebenfalls unter Vorspannung zum darüberliegenden Blechteil 3.

Die andere Haltelippe 22 weist an ihrem freien außenliegenden Ende eine nach unten gerichtete dreieckförmige Anformung 25 auf, die mit einem oberen Endbereich 28 des Steges 8 des Profilteiles 2 in Wirkverbindung steht, sodaß nur ein definiertes seitliches Aufspreizen des Profilteiles 2 ermöglicht wird. Eine schräg gerichtete innere Anlagefläche 26 der Anformung 25 liegt dabei auf einer korrespondierenden äußeren Fläche 27 des Endbereiches 28 auf. Ein unteres Ende der Anformung 25 reicht etwa bis zu einem horizontalen Absatz 29 des Profilteiles 2. Der obere Endbereich 28 des Profilteiles 2 erstreckt sich in Höhenrichtung gesehen bis zu einer unteren Begrenzungsfläche 30 der Haltelippe 22. Die beiden Stege 7, 8 des Profilteiles 2 sind im Anlieferungszustand nach innen gerichtet (Vorspannung) und werden beim Einsetzen der Klemmleiste 4 nach außen gedrückt. Es besteht aber auch die Möglichkeit, daß lediglich einer der beiden Stege z.B. 7' des Profilteiles 2 unter Vorspannung zum Blechteil 3 bzw. zur Klemmleiste 4 steht.

Die Montage der Klemmleiste 4 erfolgt mittels eines Preßwerkzeuges. Das untere Verbindungsstück 9 der Klemmaufnahme 6 liegt dabei auf einem nicht näher dargestellten Preßwerkzeug auf (horizontale Auflagefläche 33). Die manuell in die Klemmaufnahme 6 eingesetzte Klemmleiste 4 wird mittels eines von oben wirkenden Stempels von der Vorraststellung in die Hauptraststellung bewegt, sodaß über die gesamte Längserstreckung von Blechteil 3 und Klemmaufnahme 6 eine wirkungsvolle Klemmverbindung 1 gegeben ist. Bei eingesetzter Klemmleiste 4 ist zwischen dem erweiterten Grund 15 der Klemmaufnahme 6 und dem unteren Ende des Fußabschnittes 19 ein geringer Spalt vorgesehen, um ein zu tiefes Einpressen zu verhindern. Zusätzlich zur Klemmverbindung 1 kann eine Klebeverbindung zwischen Profilteil 2, Klemmleiste 4 und Blechteil 3 vorgesehen werden. Hierzu wird vor dem Einlegen des Blechteiles 3 und dem Einsetzen der Klemmleiste 4 ein nicht dargestellter Klebekörper in den erweiterten Grund 15 der Klemmaufnahme 6 eingebracht. Im Ausführungsbeispiel bilden das Profilteil 2 und das Blechteil 3 Abschnitte eines Mitteltunnels 31 einer Fahrzeug-Aufbaustruktur 32. Selbstverständlich kann die erfindungsgemäße Klemmverbindung 1 auch an anderen Stellen einer Aufbaustruktur 32 angewandt werden.

## Patentansprüche

1. Klemmverbindung (1) zwischen einem Profilteil (2) und einem Blechteil (3) unter Vermittlung einer Klemmleiste (4), wobei ein Endbereich (12) des Blechteiles (3) auf einem etwa L-förmigen Stiel (7) einer keilförmigen, nach oben hin offenen Klemmauflage (6) aufliegt und zwischen der Klemmleiste (4) und der Klemmaufnahme (6) angeklemmt ist und daß ein Fußabschnitt (19) der Klemmleiste (4) zumindest eine angeformte Rastnase (18, 18') aufweist, die mit einem hinterschnittenen Bereich (17) des Profilteils (2) zusammenwirkt, **dadurch gekennzeichnet**, daß die Klemmleiste (4) einen etwa T-förmigen aus einem Fußabschnitt (19) und einem Kopfabschnitt (20) zusammengesetzten Querschnitt aufweist, wobei der etwa rechtwinkelig abgestellte Endbereich (12) des Blechteiles (3) zwischen dem L-förmigen Steg (7) der Klemmaufnahme (6) und dem Fußabschnitt (19) eingespannt ist und die am Fußabschnitt (19) vorgesehene Rastnase (18, 18') mit dem am gegenüberliegenden Steg (8) der Klemmaufnahme (6) ausgebildeten hinterschnittenen Bereich (17) in Wirkverbindung steht und daß sich eine Haltelippe (22) des Kopfabschnittes (20) am Profilteil (2) abstützt, wogegen die andere Haltelippe (21) unter Vorspannung an der Außenseite des Blechteiles (3) anliegt.

2. Klemmverbindung nach Anspruch 1, **dadurch gekennzeichnet**, daß die Haltelippe (22) an ihrem freien Ende eine nach unten gerichtete Anformung (25) aufweist, die mit einem oberen Endbereich (28) des Steges (8) zusammenwirkt, dergestalt, daß beim Einsetzen der Klemmleiste (4) lediglich ein definiertes seitliches Aufspreizen der Klemmaufnahme (6) ermöglicht wird.

3. Klemmverbindung nach Anspruch 1, **dadurch gekennzeichnet**, daß zwischen der Haltelippe (21) des Kopfabschnittes (20) und dem kürzeren Schenkel (10) des L-förmig profilierten Steges (7) das Blechteil (3) aufgenommen wird, wobei sowohl die Haltelippe (21) als auch der Schenke) (10) unter Vorspannung zum Blechteil (3) stehen.

4. Klemmverbindung nach Anspruch 1, **dadurch gekennzeichnet**, daß der Fußabschnitt (19) der Klemmleiste (4) zwei übereinanderliegend angeordnete Rastnasen (18, 18') aufweist, wobei die untere Rastnase (18') eine Vorraststellung und die obere Rastnase (18) eine Hauptraststellung definieren.

5. Klemmverbindung nach Anspruch 1, **dadurch gekennzeichnet**, daß am Profilteil (2) unterhalb der Klemmaufnahme (6) eine ebene Auflagefläche (33) für ein Preßwerkzeug ausgebildet ist.

6. Klemmverbindung nach Anspruch 1, **dadurch gekennzeichnet**, daß das Profilteil (2) durch ein vorzugsweise aus Leichtmetall hergestelltes Strangpreßprofil gebildet wird.

7. Klemmvorrichtung nach Anspruch 1, **dadurch gekennzeichnet**, daß das Profilteil (2) die Klemmleiste (4) und das Blechteil (3) vorzugsweise aus Leichtmetall hergestellt sind.

8. Klemmverbindung nach Anspruch 1, **dadurch gekennzeichnet**, daß bei eingesetzter Klemmleiste (4) zwischen dem erweiterten Grund (15) der Klemmaufnahme (6) und dem unteren Ende des Fußabschnittes (19) ein geringer Spart vorgesehen ist.

9. Klemmverbindung nach Anspruch 2, **dadurch gekennzeichnet**, daß die dreieckförmige Anformung (25) der Haltelippe (22) eine innere, schräggerichtete Anlagefläche (26) aufweist, die bei montierter Klemmleiste (4) auf einer korrespondierenden Fläche (27) eines oberen Endbereiches (28) des Steges (8) aufliegt.

## Claims

1. A clamping connexion (1) between a profiled part (2) and a sheet-metal part (3) by means of a clamping strip (4), wherein an end area (12) of the sheet-metal part (3) rests on a substantially L-shaped stem (7) of a wedge-shaped clamping receiving means (6) open towards the top and is clamped between the clamping strip (4) and the clamping receiving means (6), and a foot portion (19) of the clamping strip (4) comprises at least one integrally formed catching projection (18, 18') cooperating with an undercut area (17) of the profiled part (2), **characterized in that** the clamping strip (4) comprises a substantially T-shaped cross-section formed by a foot portion (19) and a head portion (20), wherein the end area (12) of the sheet-metal part (3) projecting substantially at right angles is clamped between the L-shaped web (7) of the clamping receiving means (6) and the foot portion (19), and the catching projection (18, 18') provided on the foot portion (19) is operatively connected to the undercut area (17) formed on the opposite web (8) of the clamping receiving means (6), and one holding lip (22) on the head portion (20) is supported on the profiled part (2), whereas the other holding lip (21) rests on the outside of the sheet-metal part (3) with pre-stressing.

2. A clamping connexion according to Claim 1, **characterized in that** the holding lip (22) is provided at the free end thereof with an integrally formed attachment (25) directed downwards and cooperating with an upper end area (28) of the web (8) in such a way that when the clamping strip (4) is inserted only a defined lateral spreading of the clamping receiving means (6) is possible.

3. A clamping connexion according to Claim 1, **characterized in that** the sheet-metal part (3) is received between the holding lip (21) of the head portion (20) and the shorter arm (10) of the web (7) with an L-shaped profile, wherein both the holding lip (21) and the arm (10) are pre-stressed with respect to the sheet-metal part (3).

4. A clamping connexion according to Claim 1, **characterized in that** the foot portion (19) of the clamping strip (4) comprises two catching projections (18, 18') arranged one above the other, the lower catching projection (18') defining a preliminary catching position and the upper catching projection (18) defining a main catching position.

5. A clamping connexion according to Claim 1, **characterized in that** a flat support face (33) for a pressing tool is formed on the profiled part (2) below the clamping receiving means (6).

6. A clamping connexion according to Claim 1, **characterized in that** the profiled part (2) is formed by an extruded section preferably produced from light metal.

7. A clamping connexion according to Claim 1, **characterized in that** the profiled part (2), the clamping strip (4) and the sheet-metal part (3) are preferably produced from light metal.

8. A clamping connexion according to Claim 1, **characterized in that** a slight gap is produced when the clamping strip (4) is inserted between the enlarged base (15) of the clamping receiving means (6) and the lower end of the foot portion (19).

9. A clamping connexion according to Claim 2, **characterized in that** the triangular attachment (25) of the holding lip (22) has an inner, obliquely orientated abutment face (26) resting on a corresponding face (27) of an upper end area (28) of the web (8) when the clamping strip (4) is assembled.

## Revendications

1. Assemblage par serrage (1) entre un profilé (2) et une tôle (3) par l'intermédiaire d'une baguette de serrage (4), dans lequel une zone d'extrémité (12) de la tôle (3) repose sur une tige (7) à peu près en L d'un support de serrage (6) en forme de coin, ouvert vers le haut, et est serrée entre la baguette de serrage (4) et le logement de serrage (6) et en ce qu'une portion de pied (19) de la baguette de serrage (4) présente au moins un ergot d'arrêt (18, 18') formé d'un seul tenant, qui coopère avec une partie détalonnée (17) du profilé (2), caractérisé en ce que la baguette de serrage (4) présente une section transversale à peu près en T, constituée d'une portion de pied (19) et d'une portion de tête (20), la zone d'extrémité (12), à peu près coudée à angle droit de la tôle (3) étant serrée entre la cloison en L (7) du logement de serrage (6) et la portion de pied (9), et l'ergot d'arrêt (18, 18'), prévu sur la portion de pied (19), étant en liaison active avec la zone détalonnée (17), formée sur la cloison (8) opposée du logement de serrage (6), et en ce qu'une lèvre de retenue (22) de la portion de tête (20) prend appui contre le profilé (2), tandis que l'autre lèvre de retenue (21) s'applique sous précontrainte contre le côté extérieur de la tôle (3).

2. Assemblage par serrage selon la revendication 1, caractérisé en ce que la lèvre de retenue (22) présente, à son extrémité libre, une forme (25) dirigée vers le bas, qui coopère avec une zone d'extrémité (28) supérieure de la cloison (8), de manière que lors de la mise en place de la baguette de serrage (4), seul un écartement latéral défini du logement de serrage (6) est rendu possible.

3. Assemblage par serrage selon la revendication 1, caractérisé en ce que la tôle 3 est logée entre la lèvre de retenue (21) de la portion de tête (20) et le petit côté (10) de la cloison (7) profilée en L, la lèvre de retenue (21) ainsi que le côté (10) étant précontraints par rapport à la tôle (3).

4. Assemblage par serrage selon la revendication 1, caractérisé en ce que la portion de tête (19) de la baguette de serrage (4) comporte deux ergots d'arrêt (18, 18') superposés, l'ergot d'arrêt inférieur (18') définissant une position de pré-encliquetage et l'ergot d'arrêt supérieur (18) une position d'encliquetage principale.

5. Assemblage par serrage selon la revendication 1, caractérisé en ce qu'une surface d'appui plane (33) pour un outil de pression est formée sur le profilé (2), au-dessous du logement de serrage (6).

6. Assemblage par serrage selon la revendication 1, caractérisé en ce que le profilé (2) est formé par un profilé extrudé, réalisé de préférence en métal léger.

7. Assemblage par serrage selon la revendication 1, caractérisé en ce que le profilé (2), la baguette de serrage (4) et la tôle (3) sont réalisés de préférence dans un métal léger.

8. Assemblage par serrage selon la revendication 1, caractérisé en ce qu'il est prévu une fente réduite lorsque la baguette de serrage (4) est insérée entre le fond élargi (15) du logement de serrage (6) et l'extrémité inférieure de la portion de pied (19).

9. Assemblage par serrage selon la revendication 2, caractérisé en ce que la forme triangulaire (25) de la lèvre de retenue (22) présente une surface d'application (26) intérieure, dirigée obliquement, qui repose sur une surface correspondante (27) d'une zone d'extrémité supérieure (28) de la cloison (8), lorsque la baguette de serrage (4) est montée.
